# EUROPÄISCHE PATENTSCHRIFT

(11) **EP 3 749 863 B1**
(45) Veröffentlichungstag und Bekanntmachung des Hinweises auf die Patenterteilung: **28.08.2024**
(21) Anmeldenummer: 19710599.2
(22) Anmeldetag: 04.02.2019
(51) Int. Cl.: F04D 25/08, F04D 27/00, G05B 13/04

(54) **VERFAHREN ZUR OPTIMIERUNG DES WIRKUNGSGRADS UND/ODER DER LEBENSDAUER EINES VENTILATORS ODER EINER VENTILATOR-ANORDNUNG**
METHOD FOR OPTIMISING THE EFFICIENCY AND/OR SERVICE LIFE OF A FAN OR FAN ARRANGEMENT
PROCÉDÉ D'OPTIMISATION DU RENDEMENT ET/OU DE LA DURÉE DE VIE D'UN VENTILATEUR OU D'UN SYSTÈME DE VENTILATEUR

(30) Priorität: 05.02.2018 DE 102018201708
(43) Veröffentlichungstag der Anmeldung: 16.12.2020
(73) Patentinhaber: ZIEHL-ABEGG SE, 74653 Künzelsau (DE)
(72) Erfinder: WENGER, Bjoern, 74575 Schrozberg (DE)
(74) Vertreter: Ullrich & Naumann PartG mbB
(86) Internationale Anmeldenummer: PCT/DE2019/200008
(87) Internationale Veröffentlichungsnummer: WO 2019/149325

(56) Entgegenhaltungen:
- EP-A1- 1 669 226
- EP-A1- 2 947 329
- EP-A2- 1 420 153
- DE-A1- 102014 000 825
- DE-A1- 102015 118 289
- US-A1- 2016 333 854

## Beschreibung

Die Erfindung betrifft ein Verfahren zur Optimierung des Wirkungsgrads und/oder der Lebensdauer eines Ventilators oder einer Ventilator-Anordnung. Wechselwirkungen mit anderen Ventilatoren, den Umgebungsbedingungen und/oder den Menschen, die sich im Umfeld des Ventilators befinden bzw. dort arbeiten, spielen auch eine Rolle. Auch eine sogenannte Mehrzieloptimierung gehört dazu.

An dieser Stelle sei angemerkt, dass je mehr Ventilatoren und/oder externe Geräte in die Optimierung einbezogen werden, desto größer ist das Potential der Wirkungsgradsteigerung. Ein Beispiel hierfür ist die Lastverteilung im Falle einer Anordnung mehrerer Ventilatoren.

Der Erfindung liegt die grundsätzliche Idee zugrunde, in jedem Betriebspunkt des Ventilators den bestmöglichen Wirkungsgrad zu gewährleisten. Aufgrund gegenläufiger Betriebsparameter ist dies schwierig.

Aus der Praxis eines Ventilators ist es bekannt, dass das Kugellager und das Kugellagerfett kritische Parameter für die Lebensdauer des Ventilators sind. Die Lebensdauer des Kugellagers und des Kugellagerfetts hängt maßgeblich von der Betriebstemperatur im bzw. am Motor und den auf das Kugellager wirkenden mechanischen Kräften ab. Da in unmittelbarer Nähe des Lagers weder Temperatursensoren noch Kraftsensoren positionierbar sind, lassen sich weder die Lagertemperatur noch auf das Lager wirkende Lagerkräfte messen. Folglich ist es erforderlich, diese Parameter entweder indirekt zu messen oder rechnerisch zu ermitteln.

Aus DE 10 2010 002 294 A1 ist ein System bzw. Verfahren zur Ermittlung des Zustands des Lagers einer elektrischen Maschine bekannt. Reale Sensoreinheiten ermitteln einen Messwert der an eine Simulationseinheit übermittelt wird. Mittels der Simulationseinheit wird ein Ergebniswert ermittelt, der entweder ein Lagerstrom-Wert oder ein vom Lagerstrom abhängiger Wert ist. Der Ergebniswert wird zur weiteren Berechnung einer weiteren Einheit übermittelt. Das bekannte System/ Verfahren ist aufgrund der erforderlichen Sensorik aufwändig und lässt sich bei Ventilatoren in Ermangelung eines hinreichenden Bauraumes nur schwer anwenden.

EP 1 669 226 A1 offenbart ein modellbasiertes Verfahren zur Regelung einer Klimaanlage eines Kraftfahrzeugs. Basis bildet ein mathematisches Modell der Luftverteil-Anlage mit Ansaugtrakt, Gebläse, Wärmetauscher, Mischkammer, Klappen, etc. Zum Regeln eines Massestroms bei einem Auslasskanal wird ein tatsächlicher Massenstrom mit dem Kanalmodell aus vorhandenen Messgrößen abgeschätzt und mit einem Soll-Massestrom verglichen. Zum Beeinflussen des Massenstroms werden eine Gebläsespannung und ein Klappenwinkel eingestellt.

US 2016/333854 A1 bezieht sich auf eine Nutzerschnittstelle für den Betrieb eines Windparks. Die Schnittstelle basiert auf einem digitalen Zwilling des Windparks, der das Verhalten des Windparks basierend auf verschiedene Eingangsgrößen nachbildet. Auf diese Weise kann ein Nutzer der Schnittstelle einen optimalen Betrieb des Windparks einstellen.

Der Erfindung liegt die Schaffung eines digitalen Abbilds des realen Ventilators zugrunde, nämlich durch Abbildung dessen Eigenschaften mittels mathematischer Berechnungsmodelle und gegebenenfalls unter Hinzuziehung bekannter Daten, ggf. realer Messdaten, geschaffen. Bei den realen Messdaten kann es sich um aktuelle Messdaten aus dem laufenden Betrieb jedes individuellen Motors (und ggf. seiner Historie) handeln. Des Weiteren wird mindestens ein betriebsparameterspezifischer Algorithmus unter Berücksichtigung bekannter Zusammenhänge, Kennlinien, etc. geschaffen und zur weiteren Berechnung hinzugezogen.

Es werden Bauteilzustände des Ventilators über das digitale Abbild mittels virtueller Sensoren ermittelt bzw. berechnet. Diese Bauteilzustände werden dem betriebs- oder betriebsparameterspezifischen oder produktspezifischen Algorithmus zugeführt, der aus den Bauteilzuständen konkrete Betriebsparameter des Ventilators ermittelt oder berechnet und gegebenenfalls, davon abgeleitet, den Betrieb des Ventilators betreffende Prognosen liefert, beispielsweise Prognosen zur Lebensdauer des Ventilators. Wesentlich ist, dass die kombinierte Nutzung ermittelter Bauteilzustände und realer Messdaten möglich ist.

Dabei werden zwei unterschiedliche Softwarekomponenten genutzt, nämlich eine erste Softwarekomponente betreffend den digitalen Zwilling und eine zweite Softwarekomponente betreffend den betriebsparameterspezifischen Algorithmus, den man als "intelligenten" Algorithmus bezeichnen kann.

Der digitale Zwilling ist ein digitales Abbild eines realen, individuellen Objekts, im Falle der erfindungsgemäßen Lehre eines Ventilators oder eines Ventilatorsystems. Der digitale Zwilling bildet die Eigenschaften des Ventilators mittels Berechnungsmodell und gegebenenfalls unter Hinzuziehung bekannter Daten des Ventilators ab. Die Aufgabe des digitalen Zwillings ist darin zu sehen, Bauteilzustände der Bauteile des Ventilators in Abhängigkeit des jeweiligen Betriebszustandes mit virtuellen Sensoren zu berechnen. Die auf Grundlage einer solchen Berechnung ermittelten Bauteilzustände werden an den betriebsparameterspezifischen Algorithmus übermittelt, der aus den Betriebsdaten des digitalen Zwillings Betriebsparameter oder Betriebszustände des Ventilators ermittelt/berechnet, beispielsweise die Lagerlebensdauer und/oder die Lagerfettlebensdauer. Aufgrund des Ergebnisses ist eine situationsgerechte Regelanpassung möglich. Betriebsparameter und Betriebszustände sind insoweit gleichermaßen relevant, als diese berechenbare Größen sind.

Die zuvor erörterte Kombination von digitalem Zwilling und betriebsparameterspezifischem Algorithmus lässt sich im Sinne eines digitalen Zwillingsalgorithmus auf einem dem Motor des Ventilators zuzuordnenden Mikroprozessor realisieren und somit dem Ventilator als festen Bestandteil zuordnen.

Der digitale Zwillingsalgorithmus ist die Kombination eines den Ventilator beschreibenden digitalen Zwillings mit einer Art intelligentem Algorithmus, der betriebsparameterspezifisch ausgelegt ist.

Mit einem entsprechend ausgestalteten Ventilator lässt sich eine vorausschauende Instandhaltung betreiben, mit dem Ziel, einen Ventilatorausfall beispielsweise aufgrund eines schadhaften Lagers oder Lagerfetts zu vermeiden. Es wird eine situationsgerechte Anpassung der Systemparameter angestrebt, um nahezu die maximal mögliche Lebensdauer des Ventilators realisieren zu können.

Unter Nutzung eines digitalen Abbilds des Ventilators und betriebsparameterspezifischer Algorithmen wird im Rahmen der vorausschauenden Instandhaltung angestrebt, die Lebensdauer der Bauteile des Ventilators möglichst komplett auszuschöpfen und gleichzeitig jeglichen Ausfall des Ventilators zu vermeiden. Die Lebensdauer des Ventilators wird unter Zugrundelegung berechneter Bauteilzustände und daraus resultierender Betriebsparameter berechnet.

Der digitale Zwilling nutzt physikalische und/oder mathematische und/oder statistische und/oder empirische und/oder kombinierte Modelle, um thermische und mechanische Bauteilzustände zu berechnen. Sowohl mathematische als auch physikalische und nicht-physikalische Modelle gehören jedenfalls dazu. Der betriebsparameterspezifische Algorithmus (intelligenter Algorithmus) benötigt die vom digitalen Zwilling ermittelten Bauteilzustände, um beliebige Betriebsparameter zu ermitteln, beispielsweise auch um den Ventilatorausfall zu prognostizieren. Da die Lebensdauer eines Ventilators in erster Linie von den Kugellagern und dem Kugellagerfett abhängt, spielt die auf das Kugellagerfett und das Kugellager fokussierte Betriebsparameterberechnung eine ganz besondere Rolle.

Es ist aus der Praxis bekannt, dass die Lebensdauer von Lagerfett maßgeblich von der Betriebstemperatur abhängt. Je höher die Betriebstemperatur über die gesamte Lebensdauer ist, umso schneller wird das Lagerfett aufgebraucht. Folglich gilt es die Lagertemperatur zu ermitteln, um die Lagerfettlebensdauer zu bestimmen.

Zur Ermittlung der Lagertemperatur müsste ein Temperatursensor in unmittelbarer Umgebung des Lagers positioniert werden. Dies ist aufgrund der geometrischen und funktionellen Gegebenheiten des Ventilators/Motors nicht möglich. Entsprechend werden in erfindungsgemäßer Weise solche Bauteilzustände, wie die Lagertemperatur, über den digitalen Zwilling nebst betriebsparameterspezifischem Algorithmus berechnet.

Die Berechnung basiert auf einem mathematischen Modell, welches wiederrum auf einem reduzierten gekoppelten thermomagnetischen Berechnungsmodell basiert. Die Kombination aus digitalem Zwilling nebst betriebsparameterspezifischem Algorithmus berechnet Wärmequellen, Wärmesenken und den thermischen Zustand des den Motor des Ventilators betreffenden Gesamtsystems. So lässt sich über die virtuellen Sensoren des digitalen Zwillings die Lagerfetttemperatur in Abhängigkeit vom Betriebszustand des Ventilators/Motors bestimmen und in den betriebsparameterspezifischen Algorithmus als Betriebszustand einspeisen.

Sowohl der digitale Zwilling inklusive seiner virtuellen Sensoren als auch der betriebsparameterspezifische Algorithmus lässt sich im Maschinen-Code (C-Code) auf den bereits vorhandenen Mikroprozessor implementieren, wodurch dem Ventilator eine gewisse Maschinenintelligenz einverleibt wird.

Voranstehende Ausführungen beschreiben ein Verfahren zur Ermittlung von Betriebszuständen eines Ventilators unter Nutzung eines digitalen Abbildes (digitaler Zwilling) des Ventilators unter Hinzunahme mindestens eines betriebsparameterspezifischen Algorithmus. Dies ist Grundlage für die nachfolgend beschriebene Erfindung, der die Aufgabe zugrunde liegt, Betriebszustände, die mit virtuellen Sensoren bestimmt werden, unter Zugrundelegung eines digitalen Zwillings-Algorithmus zu berechnen, wobei zur Realisierung des digitalen Zwillings-Algorithmus in Bezug auf den Ventilator ein Workflow definiert wird. Insbesondere gilt es, reale Sensoren zur Ermittlung von Betriebszuständen einzusparen.

Erfindungsgemäß wird die voranstehende Aufgabe durch ein Verfahren mit den Merkmalen des Anspruchs 1 gelöst, nämlich durch ein Verfahren zur Optimierung des Wirkungsgrads und/oder der Lebensdauer eines Ventilators, wobei ausgehend von bauteil- oder funktionsspezifischen numerischen Detailmodellen, unter Zugrundelegung mindestens eines Algorithmus, eine Modell- und somit Datenreduktion (Datenveredelung) zu bauteil- oder funktionsspezifischen Verhaltensmodellen erfolgt, wobei die Daten der reduzierten Modelle in Form von Tabellen oder Datenmatrizes bereitgestellt werden, wobei die reduzierten Daten der Verhaltensmodelle in einer Systemsimulation zu einem System-Verhaltensmodell mit Eingangs- und Ausgangsgrößen gekoppelt bzw. kombiniert werden wobei die Daten des System-Verhaltensmodells, nämlich Eingangsgrößen und zugehörige Ausgangsgrößen des Ventilators, in Form einer Tabelle oder Datenmatrix bereitgestellt werden, und wobei die Eingangsgrößen und zugehörigen Ausgangsgrößen des Ventilators aus dem System-Verhaltensmodell einem Optimierer zur Auswahl zur Verfügung gestellt werden, um in Abhängigkeit von Rahmenbedingungen eine optimierte Regelung des Systems zu erzielen.

Erfindungsgemäß geht es um den digitalen Zwillings-Algorithmus im Kontext mit dem "intelligenten" Ventilator, im Sinne einer Weiterentwicklung des eingangs erörterten Zwillings-Algorithmus.

Die weitere Entwicklung des digitalen Zwillings-Algorithmus ist als eigenständige situationsgerechte Anpassung der Systemparameter des Ventilators bzw. des Ventilatorsystems zu verstehen, um in jedem Betriebspunkt den bestmöglichen Wirkungsgrad und die bestmögliche Laufperformance zu gewährleisten.

Erfindungsgemäß werden zunächst numerische Detailmodelle erstellt, beispielsweise betreffend ein thermisches Modell, ein Magnetkreismodell oder ein Modell betreffend die Flügelstellung und die Strömung bzw. Strömungsverhältnisse. Bei dem Detailmodell kann es ebenso um einen digitalen Zwilling entsprechend der einleitenden Erörterung in Bezug auf eine Ventilatorumgebung, beispielsweise ein Data-Center im Sinne eines Gesamtsystems, gehen. Auch kann das Detailmodell den digitalen Zwilling einer Ventilatoranordnung betreffen.

So lassen sich Detailmodelle beispielsweise auch betreffend eine Ventilatoranordnung auf einem Verflüssiger generieren. Die Ventilatoren werden von einem Optimierer einzeln geregelt, der auf das System-Verhaltensmodell zugreift, um einen bestmöglichen Wirkungsgrad und eine homogene Druck/Strömung über den Komplement-Verflüssiger zu realisieren. Weitere Detailmodelle sind denkbar.

In einem nächsten Schritt findet die Reduktion der Detailmodelle im Rahmen einer Modellreduktion statt, nämlich zu sogenannten Verhaltensmodellen. Dies geht einher mit einer nicht unerheblichen Reduktion der anfallenden Daten.

Danach findet in der Systemsimulation eine Kopplung der reduzierte Daten aufweisenden Verhaltensmodelle statt, resultierend in eine Verhaltensstudie mit einem kombinierten Verhaltensmodell.

Die Simulation des Gesamtsystems erfolgt im Systemraum mit einer homogen verteilten Eingangsgrößenkombination. Das Ergebnis ist eine Tabelle mit den Eingangskombinationen und dazugehörenden Systemausgangsgrößen. Die Tabelle spiegelt ein Systemverhaltensmodell wieder, nämlich mit Eingangsgrößen und dazugehörenden Ausgangsgrößen des Ventilators. Anhand dieser Größen kann eine Optimierung stattfinden.

Im laufenden Betrieb sucht ein Optimierer in Abhängigkeit der Umgebungsbedingungen die bestmöglichen Systemausgangsgrößen wie zum Beispiel den Systemwirkungsgrad in der Tabelle des Verhaltensmodells in Echtzeit aus. Sobald die bestmögliche Systemausgangsgröße gefunden ist, können die dazugehörenden Eingangsgrößen aus der Tabelle gelesen werden. Mit diesen Eingangsgrößen wird das System bestmöglich geregelt, und zwar vorzugsweise in Echtzeit.

Im Lichte der voranstehenden Ausführungen ist wesentlich, dass der Optimierer den optimalen Systemwirkungsgrad aus der Systemverhaltenstabelle aussucht und dem Regelsystem die notwendigen Eingangsgrößen liefert. So ist eine ständige Optimierung möglich.

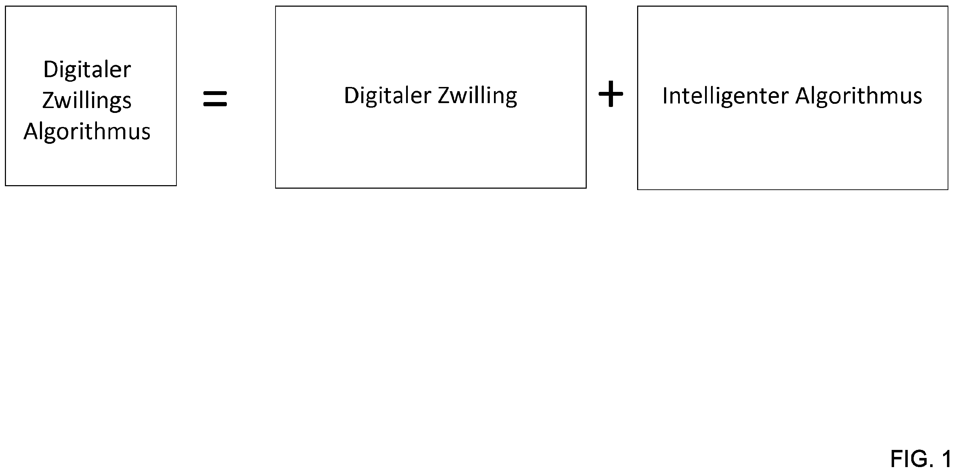

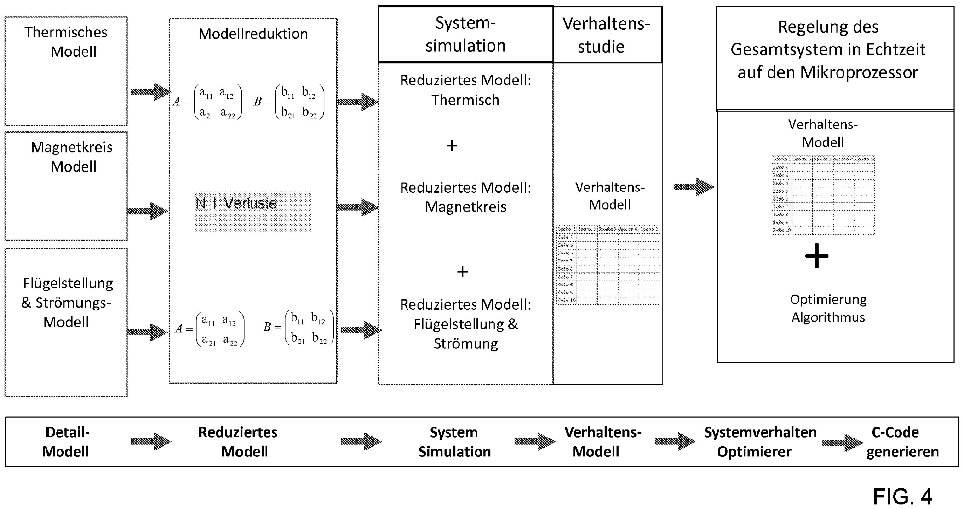

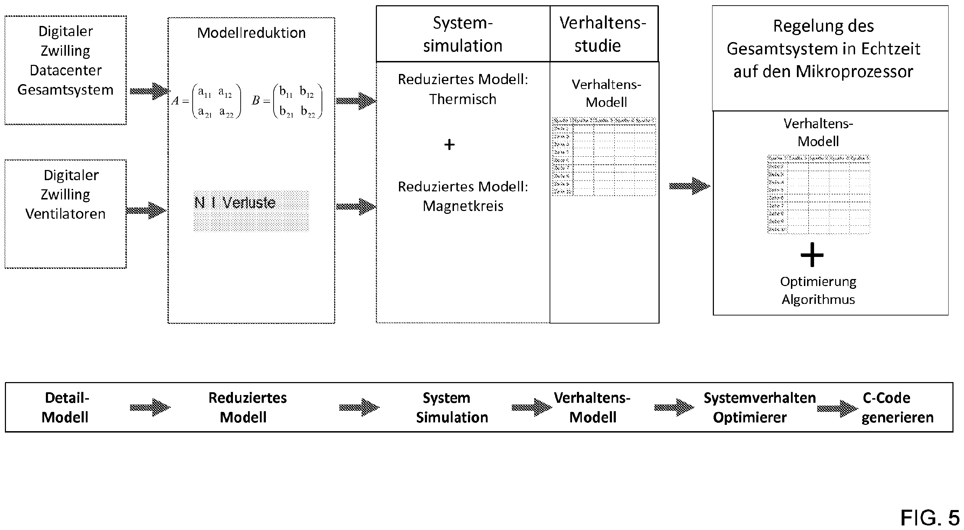

Es gibt verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1 bis 13: Verfahrensschritte zur Realisierung der erfindungsgemäßen Lehre mit besonderen Ausprägungen, wobei die erfindungsgemäße Lehre beispielhaft anhand der Figuren 4 und 5 erörtert wird.

Die Figuren 1 bis 3 dienen zum Verständnis der erfindungsgemäßen Lehre und beziehen sich auf den digitalen Zwilling und den digitalen Zwillings-Algorithmus als Grundlage für den intelligenten Ventilator.

Im Konkreten zeigt **Figur 1** die Kombination des digitalen Zwillings mit mindestens einem betriebsparameterspezifischen Algorithmus, die nachfolgend als digitaler Zwillingsalgorithmus bezeichnet wird. Dies lässt sich am Beispiel für die Lebensdauer des Lagerfetts und/oder des Lagers erörtern.

Wie bereits zuvor ausgeführt, hängt die Lebensdauer von Lagerfett und Lager von der Betriebstemperatur und der Drehzahl des Motors ab. Da kein Temperatursensor in unmittelbarer Umgebung des Lagers positionierbar ist, muss die Lagertemperatur mittels Modell berechnet werden, erfindungsgemäß mit dem digitalen Zwillingsalgorithmus, der sich aus einer Kombination von digitalem Zwilling und einem betriebsparameterspezifischen Algorithmus (intelligenter Algorithmus) ergibt.

Der digitale Zwilling ist nichts anders als ein mathematisches Modell, welches auf einem reduzierten gekoppelten thermomagnetischen und mechanischen Berechnungsmodell aufbaut. Der digitale Zwilling berechnet den thermischen und mechanischen Zustand des den Motor betreffenden Gesamtsystems. Durch die zum digitalen Zwilling gehörenden virtuellen Sensoren kann der digitale Zwilling die Lagerfetttemperatur in Abhängigkeit des Betriebszustands des Motors ermitteln.

Der intelligente Algorithmus benötigt zur Weiterverarbeitung der Daten die Bauteilzustände, um beispielsweise den Ventilatorausfall zu prognostizieren. Anhand von Ausfallkennlinien lässt sich das Versagen des Motors berechnen, zumindest aber abschätzen. Die gesamte den digitalen Zwillingsalgorithmus betreffende Software ist im Maschinen-Code (C-Code) auf dem Motormikroprozessor realisiert, so dass keine weitere Elektronik erforderlich ist.

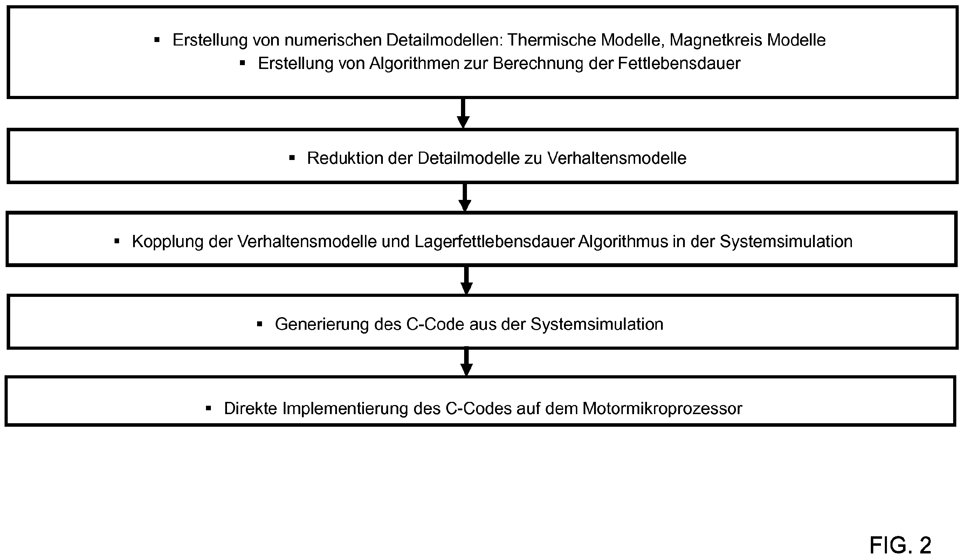

**Figur 2** zeigt den Ablauf der Lagerfettlebensdauerberechnung des Lagerfetts im Lager eines Ventilatormotors. Im Rahmen der Schaffung des digitalen Abbilds des realen Ventilators sind numerische Detailmodelle, im Konkreten thermische Modelle, Magnetkreismodelle, etc. erforderlich. Außerdem werden Algorithmen zur Berechnung der Fettlebensdauer erstellt.

Die Detailmodelle werden anschließend zu Verhaltensmodellen reduziert, damit das Datenvolumen handhabbar ist.

Anschließend findet eine Kopplung der Verhaltensmodelle und des die Lagerfettlebensdauer berechnenden Algorithmus in einer Systemsimulation statt, nämlich im Rahmen einer Kombination des digitalen Zwillings mit dem betriebsparameterspezifischen Algorithmus, der im vorliegenden Falle die Lagerfettlebensdauer berechnet. Aus der Systemsimulation wird der C-Code generiert und es findet eine direkte Implementierung des C-Codes auf dem Motormikroprozessor statt.

Wie bereits zuvor ausgeführt, ist die Modellreduktion des Detailmodells auf ein Verhaltensmodell erforderlich, um die Rechenzeit zu senken. Aufgrund dieser Maßnahme kann der digitale Zwillingsalgorithmus auf den Mikroprozessor des Motors realisiert werden. Für die thermische Modellreduktion lassen sich verschiedene Verfahren anwenden, beispielsweise das Verfahren nach Krylow. Dabei werden die Daten des Detailmodells durch Verringerung der Modellordnung reduziert.

Das magnetische Detailmodell kann durch einen Algorithmus oder durch eine Tabelle reduziert werden. In der Tabelle sind für bestimmte Konstellationen vorberechnete Ergebnisse definiert, so dass sich komplexe Berechnungen durch eine schnelle Wertsuche ersetzen lassen. Mit den entsprechend reduzierten Modellen kann die Lagerfetttemperatur und die Lagertemperatur berechnet werden. Die berechneten Werte nutzen den betriebsparameterspezifischen Algorithmus, hier den die Lagerfettlebensdauer berechnenden Algorithmus, um die Lebensdauer einerseits des Lagerfetts und andererseits des Lagers zu berechnen.

Außerdem ist es möglich, die verbrauchte Lebensdauer des Lagers/des Lagerfetts je nach Betriebstemperatur vorzugsweise exponentiell zu gewichten.

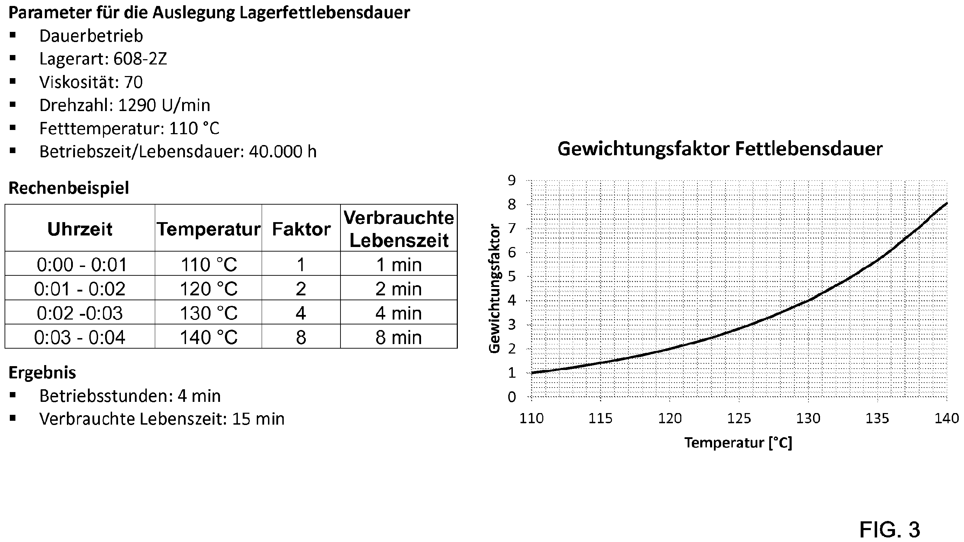

**Figur 3** zeigt den Verlauf eines solchen Gewichtungsfaktors über den Temperaturverlauf hinweg, wobei zur Lagerfettlebensdauerberechnung beispielhafte Parameter wie Dauerbetrieb, Lagerart, Viskosität, Drehzahl, Fetttemperatur und Betriebszeit/Lebensdauer zugrunde gelegt werden. Das Rechenbeispiel ergibt bei einer Betriebsdauer von vier Minuten eine verbrauchte Lebenszeit von 15 Minuten.

Es werden die reduzierten Modelle gemäß digitalem Zwilling und der betriebsparameterspezifische Algorithmus betreffend die Lagerfettlebensdauer in eine Systemsimulation eingebunden und miteinander verknüpft. Die Systemsimulation kann beispielsweise im Programm MATLAB erstellt werden. Mit dem Code-Generator von MATLAB ist es möglich, die Systemsimulation in den C-Code zu übersetzen und auf dem Motormikroprozessor zu implementieren.

Die **Figuren 4** **und** **5** zeigen die einzelnen Schritte des erfindungsgemäßen Verfahrens, wobei sich Figur 4 auf die Stellung des Flügelwinkels und Figur 5 auf die Lastverteilung von Ventilatoren eines Data-Centers bezieht. Die jeweiligen Verfahrensschritte von der Schaffung bzw. Bereitstellung eines Detailmodells über ein reduziertes Modell, eine Systemsimulation bis hin zu einem Verhaltensmodell sind in beiden Fällen identisch. Unter Zugrundelegung des Verhaltensmodells sucht der Optimierer den optimalen Systemwirkungsgrad aus der Systemverhaltenstabelle aus und übergibt die korrespondierenden Eingangsgrößen an den Regler, wobei eine Regelung in Echtzeit erfolgt. Die Prozedur nebst Daten werden im C-Code generiert, so dass die Optimierung auf einem üblichen Prozessor laufen kann.

Gemäß der Darstellung in Figur 4 ist der Winkel der Flügelstellung der Flügel des Ventilators so zu regeln, dass ein optimaler Systemwirkungsgrad je nach Betriebspunkt entsteht. Aus dem Detailmodell wird unter Zugrundelegung eines geeigneten Algorithmus ein reduziertes Modell abgeleitet, woraus im Rahmen einer Systemsimulation, unter Zugrundelegung mehrerer Detailmodelle, eine Verhaltensstudie bzw. ein daraus resultierendes Verhaltensmodell entsteht. Der Optimierer sucht den optimalen Systemwirkungsgrad aus der Systemverhaltenstabelle aus und übergibt die korrespondierenden Eingangsgrößen, mit denen sich die Optimierung erreichen lässt, dem Regelmechanismus. Es findet eine Regelung des Gesamtsystems in Echtzeit auf einem Mikroprozessor statt, nämlich unter Zugrundelegung des Verhaltensmodells und des zur Optimierung dienenden Algorithmus. Die Daten und der Algorithmus über die Programmierung liegen im C-Code vor.

Gemäß der Darstellung in Figur 5 geht es um die Lastverteilung von einer Anordnung mehrerer Ventilatoren, bei dem gewählten Ausführungsbeispiel um die Lastverteilung von Ventilatoren eines Data-Centers. Die Strömungsgeschwindigkeit und die dadurch notwendige Lastverteilung einzelner Ventilatoren ist so zu regeln, dass ein optimaler Systemwirkungsgrad je nach der herrschenden Temperatur im Data-Center entsteht. Der Optimierer sucht auch hier den optimalen Systemwirkungsgrad aus der Systemverhaltenstabelle und übergibt dem Regelmechanismus die korrespondierenden Eingangsgrößen, so dass eine Regelung des Gesamtsystems in Echtzeit auf einem Mikroprozessor erfolgen kann. Auch hier werden die Daten des Verhaltensmodells dem zur Optimierung dienenden Algorithmus zugeführt, wobei das Programm im C-Code auf üblichen Prozessoren läuft.

Das erfindungsgemäße Verfahren ermöglicht unter Zugrundelegung der zuvor erörterten Datenreduktion einen kompakten C-Code zu erstellen, der auf Standardmikroprozessoren betrieben werden kann. Auf dem Mikroprozessor findet eine Art Datenveredelung (Big Data → Smart Data) statt, wobei dies das Berechnungsergebnis ist. Nur die komprimierten veredelten Daten werden weiterverarbeitet oder beispielsweise in eine Cloud versendet. Es ist selbstredend, dass sich dadurch das Streamingvolumen der Verbindung in die Cloud ganz erheblich reduziert.

Des Weiteren lassen sich die, anhand des digitalen Zwillings und betriebsparameterspezifischen Algorithmus ermittelten Betriebsparameter zur vorausschauenden Instandhaltung und zur Instandhaltung eines Ventilators einerseits und zur Optimierung der Konstruktion und des Betriebs eines Ventilators andererseits verwenden, wobei nach der hier beanspruchten Lehre der digitalen Zwillings-Algorithmus zur eigenständigen situationsgerechten Anpassung der Systemparameter weiterentwickelt wird, um nämlich in jedem Betriebspunkt den bestmöglichen Wirkungsgrad und die bestmögliche Laufperformance zu gewährleisten.

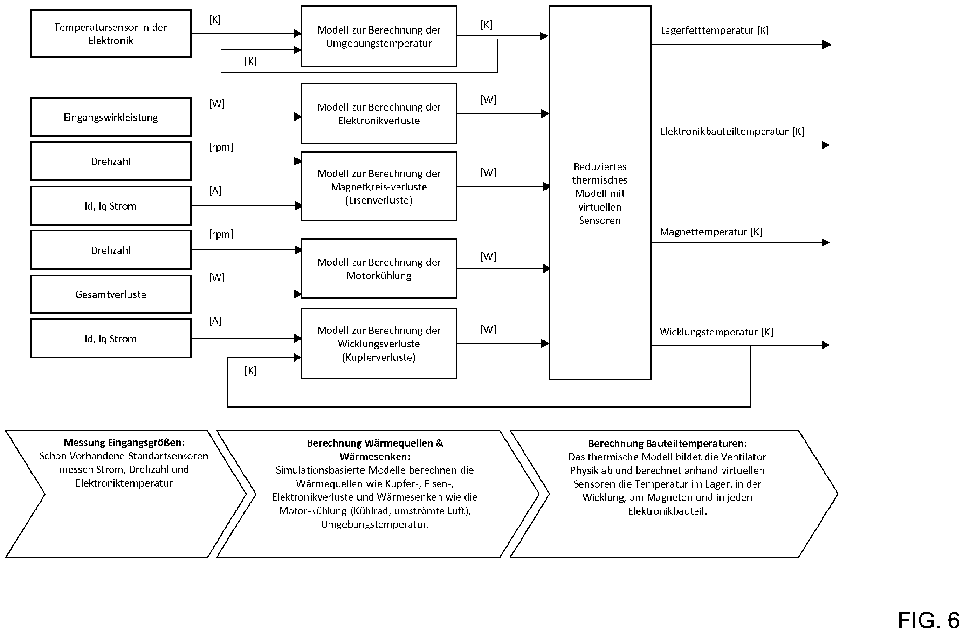

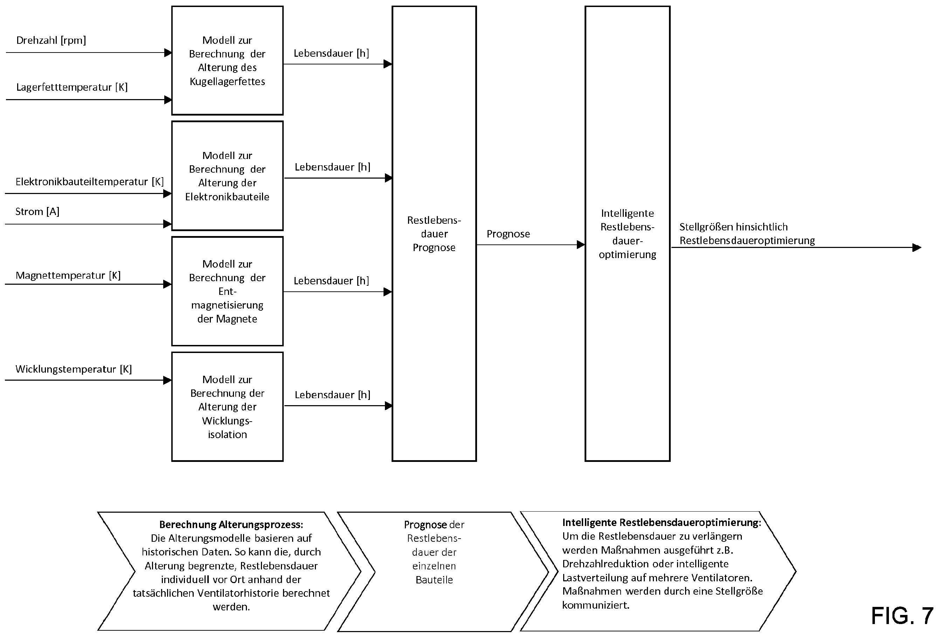

Die Darstellung in den **Figuren 6** **und** **7** dient zur weiterreichenden Erläuterung der beanspruchten Lehre, wie sie bereits beispielhaft unter Bezugnahme auf die Figuren 4 und 5 erörtert worden ist.

Wesentlich ist die Nutzung eines digitalen Abbilds, nämlich eines digitalen Zwillings des Ventilators. Der digitale Zwilling entsteht per Datenverarbeitung. Er entsteht im Konkreten aus einer Kombination bekannter Eingangsgrößen oder Sensormesswerten mit berechneten Werten und Berechnungen/Modellen. Anhand des digitalen Zwillings erfolgt die Ermittlung von Bauteiltemperaturen, Strömen, Verlusten, etc. an bestimmten vorgegebenen Stellen des Ventilators. Anhand des digitalen Zwillings werden reale Werte wie beispielsweise konkrete Bauteiltemperaturen virtuell bestimmt, nämlich dann, wenn an der jeweiligen konkreten Stelle des Ventilators keine wirtschaftlich/konstruktiv sinnvolle Möglichkeit der Messung mittels Sensorik besteht.

Von weiterer Bedeutung für die beanspruchte Lehre ist der betriebsparameterspezifische Algorithmus. Anhand der Ergebnisse bzw. Daten, die der digitale Zwilling liefert, beispielsweise der Lagertemperatur, werden Kenngrößen wie beispielsweise eine Ausfallwahrscheinlichkeit oder verbrauchte Lebensdauer des Ventilators bzw. des Lagers des Ventilators bestimmt. Diese Kenngrößen sind abhängig von den aktuellen Betriebsparametern des Ventilators und deren Historie, d.h. in welchen Betriebspunkten und Umgebungen der Ventilator betrieben wird/wurde.

Die Figuren 6 und 7 verdeutlichen anhand eines konkreten Beispiels das erfindungsgemäße Verfahren zur Ermittlung von Betriebszuständen eines Ventilators unter Nutzung eines digitalen Abbildes des Ventilators unter Berücksichtigung der voranstehenden Ausführungen.

In der linken Spalte von Figur 6 stehen gemessene oder berechnete Eingangsgrößen inklusive der den Pfeilen zugeordneten Einheiten. Diese Eingangsgrößen werden über vorhandene Standardsensoren gemessen oder sind bekannt.

Aus diesen Eingangsgrößen werden Wärmequellen und Wärmesenken berechnet. Zugrunde gelegt werden simulationsbasierte Modelle, die die Wärmequellen wie beispielsweise Kupfer-, Eisen-, Elektronikverluste und Wärmesenken wie die Motorkühlung (Kühlrad, umströmte Luft und Umgebungstemperatur) berücksichtigen. Daraus resultieren Eingangsgrößen für ein reduziertes thermisches Modell mit virtuellen Sensoren. Dies alles entspricht dem digitalen Zwilling im Sinne eines thermischen Modells.

Aus dem reduzierten thermischen Modell mit virtuellen Sensoren werden Bauteiltemperaturen berechnet. Das thermische Modell bildet dabei die Ventilatorphysik ab und berechnet anhand virtueller Sensoren die Temperatur im Lager, in der Wicklung, am Magneten und in den verschiedenen Elektronikbauteilen, je nach Bedarf.

Figur 7 zeigt als Fortsetzung von Figur 6 deutlich, dass Ausgangsgrößen aus dem reduzierten thermischen Modell, gegebenenfalls mit weiteren Parametern, als Eingangsgrößen zur Berechnung des Alterungsprozesses herangezogen werden. Zugrundeliegende Alterungsmodelle basieren auf historischen Daten und können als Kennlinien hinterlegt sein. So kann die durch Alterung begrenzte Restlebensdauer individuell vor Ort anhand der tatsächlichen Ventilatorhistorie und des aktuellen Betriebszustands berechnet oder korrigiert werden.

Aus den jeweiligen Modellen zur Berechnung der Alterung resultiert eine berechnete Lebensdauer in Tagen oder Stunden, die, für sich gesehen, als bloße Information dienen kann. Die diesbezüglichen Informationen können dann zur weiterführenden Prognose herangezogen werden, nämlich zur Prognose der Restlebensdauer der einzelnen Bauteile oder des gesamten Ventilators. Diese Prognose kann dann zur intelligenten Restlebensdauer-Optimierung genutzt werden. Um die Restlebensdauer zu verlängern können Maßnahmen ausgeführt werden, beispielsweise eine Reduktion der Drehzahl oder eine intelligente Lastverteilung auf mehrere Ventilatoren. Diese Maßnahmen können durch eine Stellgröße kommuniziert werden.

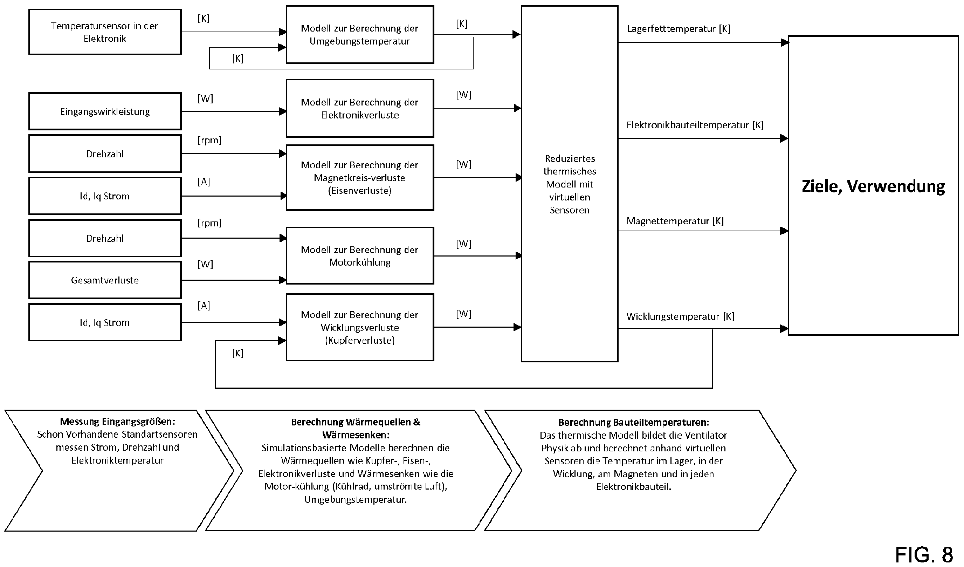

**Figur 8** zeigt noch einmal den digitalen Zwilling bis hin zum reduzierten thermischen Modell mit virtuellen Sensoren, wobei dadurch der Ventilator nebst Motor abgebildet wird. Wie bereits zuvor ausgeführt, bildet das thermische Modell die Ventilatorphysik ab und berechnet anhand virtueller Sensoren verschiedene Temperaturen, die zu unterschiedlichen Zwecken/Zielen/Verwendungen herangezogen werden, in Stichworten beispielsweise:
- **zur Überwachung:** Ermittlung von Betriebsparametern mit Hilfe von virtuellen Sensoren und Nutzung dieser zur Überwachung. Dies können sein: Warnmeldungen, Status-LEDs, Kommentare in einem auslesbaren Fehler-Code, Abbildungen in Cloud oder App-Anwendung, Darstellung in User-Interfaces.
- **zu Predictive Maintenance:** Verfahren zur Ermittlung der Alterung eines Ventilators, bestehend aus zahlreichen Teilsystemen, wie Kugellager, Wicklung, Elektronikbauteile, Magnete und Prognose der Restlebensdauer. Nutzung zur z.B. Planung von Wartungsintervallen, zur Erreichung einer möglichst langen Lebensdauer bevor Wartungsintervall (d.h. kein zu frühes Warten), automatische Terminplanung von Wartungsterminen, Meldung von Wartungsnotwendigkeit, automatische Bestellung von Ersatzteilen.
- **zur Optimierung:** Verfahren zur Ermittlung von Betriebszuständen die Produktperformance betreffend, d.h. Wirkungsgrad, Bauteiltemperaturen, Drehzahl, Ausgangsleistung, Volumenstrom, Lautstärke, Schwingungen, etc.
- **zur Schaffung eines intelligenten Ventilators:** Reaktion auf bestimmte Betriebszustände zur Verbesserung des Verhaltens oder zur Erreichung bestimmter Ziele.
   - Veränderung des Betriebspunktes/Veränderung der Regelparameter für optimalen Wirkungsgrad.
   - Veränderung des Betriebspunktes um möglichst lange Lebensdauer zu erreichen.
   - Verringerung der Drehzahl, wenn Ausfallwahrscheinlichkeit sehr hoch ist:
   - Veränderung des Betriebspunktes bei Tag-Nacht-Rhythmus für möglichst leise Nachtanwendung.
   - Ausgabe einer Stellgröße für Zusatzgeräte oder Kundengeräte, z.B. Temperaturausgabe zur Nutzung in Regelung einer Wärmepumpe, oder für eine zusätzliche Kühlung.
   - Gezielte Umgehung kritischer Systemzustände (z.B. Resonanzen, Übertemperaturen, etc.).

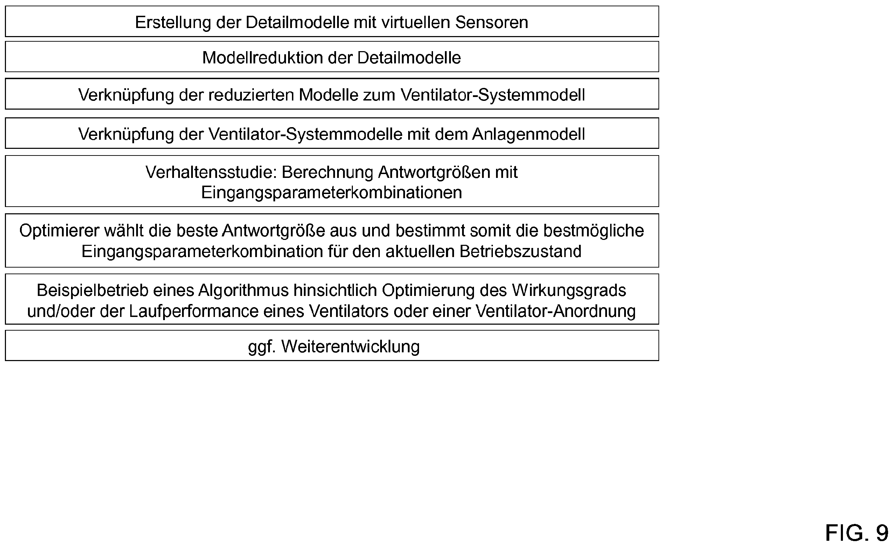

Zum besseren Verständnis der erfindungsgemäßen Lehre sind einerseits die Reihenfolge der Verfahrensschritte und andererseits deren Inhalte von Bedeutung. Die Reihenfolge der jeweiligen Verfahrensschritte lässt sich aus dem Entwicklungsworkflow des zugrundeliegenden Algorithmus ableiten. Dieser ist in Figur 9 gezeigt, wobei in einem letzten Schritt eine Weiterentwicklung des Verfahrens erfolgen kann.

Zur Schaffung eines Detailmodells ist grundsätzlich folgendes relevant:
Ein Modell ist ein Abbild oder eine Approximation an die Realität, das heißt definitionsgemäß eine Annäherung. Ein Modell beschränkt sich immer auf einen Ausschnitt, der für die angestrebte Abbildung von Interesse ist. Außerdem ist ein Modell grundsätzlich nicht vollständig, da es entweder für die einfachere Verwendung in Bezug auf dessen notwendige Eingabegrößen reduziert wird, oder einzelne physikalische Verhaltenselemente bei der Modellerstellung nicht bekannt sind. Abhängig von der späteren Nutzung und Zielsetzung ist eine andere Art Modellbildung notwendig, d.h. zum Beispiel eine anderer betrachteter Bereich, eine notwendige andere Genauigkeit in den Ergebnissen oder Schnelligkeit der Berechnung. Es gibt sehr viele Arten von Modellen, wobei im technischen Bereich meist ein Modell mit einer mathematischen Darstellung verbunden wird, beispielsweise mit algebraischen Gleichungen oder Ungleichungen, Systemen gewöhnlicher oder partieller Differentialgleichungen, Zustandsraumdarstellungen, Tabellen, Graphen.

Fester Bestandteil in der heutigen Produktentwicklung ist die virtuelle Produktentwicklung unter Verwendung der FE-Simulation (Finite Elemente Simulation). Klassischerweise wird hier eine physikalische Domäne (z.B. Festigkeit oder Thermik oder Magnetkreis) in einem sehr großen (Größenordnung 100 Gigabyte) und rechenintensiven Modell abgebildet und die Ergebnisse an Millionen Stellen (Knoten) im Modell bestimmt. Dies ist eine Variante von Detailmodellen. Der grobe Ablauf in der Erstellung dieser Detailmodelle lässt sich wie folgt skizzieren:
1. Import einer 3D-Geometrie zum Beispiel aus dem Bereich der CAD,
2. Zuweisung von Randbedingungen, d.h. feste Einspannungen, Materialdefinitionen, Kontaktbedingungen (Klebestellen, gleitende Verbindungen, Wärmeisolation),
3. Vernetzung (Auftrennen der Geometrie in Millionen kleine Elemente, die verknüpft sind,
4. Aufbringen der Belastung, also Kräfte, Wärmequellen-/senken, magnetische Felder,
5. Automatisches Lösen der sich ergebenden Differentialgleichungen für jedes einzelne Element und Zusammenfügen zu einem großen Ergebnis für das Gesamtmodell,
6. Bewertung der Ergebnisse.

Die Erstellung von Detailmodellen mit virtuellen Sensoren in Bezug auf Ventilatoren/Gesamtsysteme mit Ventilatoren ergibt sich wie folgt:
Es werden Detailmodelle mit dem Ziel erstellt, die Physik des Ventilators und/oder des Gesamtsystems abbilden zu können. Sogenannte virtuelle Sensoren sind definierte Berechnungspunkte in den Detailmodellen. Diese virtuellen Sensoren berechnen Bauteilzustände, beispielsweise die Wicklungstemperatur im thermischen Detailmodell des Ventilators. Detailmodelle sind Simulationsmodelle, die in Bezug auf die Rechenzeit, die benötigte Rechenleistungund den Speicherbedarf aufwändig sind. Solche detaillierten Modelle wie beispielsweise thermische Modelle, Magnetkreismodelle, Elektronikmodelle, Regelmodelle, Kraftmodelle oder Schwingungsmodelle dienen zur Berechnung nicht linearer Betriebszustände. Die physikalischen Effekte des Systems beinhalten Wechselwirkungen zwischen den Domänen, weshalb die einzelnen Modelle gekoppelt im Gesamtsystem betrachtet werden müssen. Berechnungen mit Detailmodellen im Gesamtsystem sind hinsichtlich Rechenzeit nicht praktikabel, da Wechselwirkungen nicht in Echtzeit ausgewertet werden können. Eine Modellreduktion ist daher erforderlich.

Die Erzeugung von reduzierten Modellen kann sich wie folgt vollziehen:
Eine Modellreduktion beschreibt ganz allgemein ein bereits bestehendes Modell, um weitere Informationen zu reduzieren, um es zum Beispiel auf Speicherbedarf oder Rechengeschwindigkeit zu optimieren. Hier gibt es abhängig vom konkreten Anwendungsfall viele Varianten wie zum Beispiel:
▪ Annäherung von einfachen mathematischen Funktionen, wie zum Beispiel Polynomfunktionen und lediglich Abspeichern der Koeffizienten.
▪ Ablegen von Tabellen für verschiedene Eingangsgrößen und anschließend entweder Verwendung von diesen diskreten Werten oder Interpolation zwischen den Werten.
▪ Annäherung von statistischen Modellen, die Prognosen aus bisherigen Werten liefern.
▪ Graphen/logische Gatter, Beispiel: Wenn T>200°C, dann Ventilator defekt.

### Erzeugung der reduzierten Modelle - Beispiel a)

Ausgangspunkt für das reduzierte Modell ist ein FE-Modell der Thermik, das abhängig von Wärmeeingang und Wärmeausgang die Temperaturen in jedem Punkt des Modells abbildet. Im folgenden Beispiel wird die Modellreduktion auf lediglich einen Wärmeeingang und einen Wärmeausgang, nur eine zu bestimmende Temperatur an der Stelle A und nur jeweils die Werte "hoch" und "niedrig" vereinfacht. Hierzu wird eine Parameterstudie durchgeführt, wodurch diese sogenannte "Look-Up-Tabelle" ermittelt wird:

| Temperatur an der Stelle A | Wärmeeingang = Niedrig = 1W | Wärmeeingang = Hoch = 11W |
|---|---|---|
| Wärmeausgang= Niedrig = 1W | 40°C | 80°C |
| Wärmeausgang = Hoch = 5W | 20°C | 60°C |

Anschließend gibt es mehrere Möglichkeiten die Ergebnisse zu verwenden.
▪ Verwendung der Tabelle direkt und diskret. Beispiel: Wenn eine Temperatur an der Stelle A für einen Wärmeeingang von 4W und Wärmeausgang von 1W prognostiziert werden soll, wird direkt der Wert von 40°C übernommen.
▪ Verwendung der Tabelle und lineare Interpolation zwischen den Werten. Beispiel: Wenn eine Temperatur an der Stelle A für einen Wärmeeingang von 5W und Wärmeausgang von 1W prognostiziert werden soll, wird der Wert von 60°C über lineare Interpolation bestimmt.
▪ Verwendung der Tabelle zur Bestimmung einer Temperaturprognosefunktion mittels Regression. Beispiele für Zielfunktionen sind Polynomfunktionen, lineare Funktionen, Exponential-Funktionen, statistische Funktionen, Differentialgleichungen, etc. Anschließend Bestimmung der Temperatur mit Hilfe dieser Funktion.

### Erzeugung der reduzierten Modelle - Beispiel b)

Ausgangspunkt für das reduzierte Modell ist ein FE-Modell der Thermik, das abhängig von Wärmeeingang und Wärmeausgang die Temperaturen in jedem Punkt des Modells abbildet. Im Anschluss darauf können mit mathematischen Annahmen, Berechnungen und Umformungen (zum Beispiel LTI-System oder Krylov-Unterraum-Verfahren) kompakte Zustandsraummodelle angenähert werden. Diese bestehen aus zwei wesentlichen Differential- bzw. Integralgleichungen und vier, das gesamte System beschreibenden, Matrizen (zum Beispiel 200x200 Matrizen gefüllt mit skalaren Zahlenwerten). Diese stellen jedoch nicht mehr die Temperatur an Millionen Knoten dar, sondern nur an wenigen ausgewählten Stellen. Außerdem kommt es durch die Näherung zu einer Abweichung der Ergebnisse abhängig von der Größe des Zustandsraummodells. Grundsätzlich gilt je größer das Modell und seine Matrizen, desto geringer die Abweichung.

Zustandsraummodelle sind als Prozeduren, Module oder Objekte in vielen Computer-Algebra-Programmen wie zum Beispiel Matlab oder auch in Programmiersprachen standardmäßig vorhanden, wodurch derartige Modelle durch simplen Import der Matrizen berechnet werden können. Eingangsgrößen sind hier zum Beispiel Wärmeleistung die in das System eingeht und Wärmesenken durch Konvektion, Ausgangsgrößen sind zum Beispiel bestimmte Bauteiltemperaturen (z.B. drei verschiedene Bauteiltemperaturen).

### Erzeugung der reduzierten Modelle - Beispiel c)

Ausgangspunkt für die Modellreduktion sind in diesem Beispiel experimentelle Ergebnisse. Hier würde ebenso wie in Beispiel a) eine Tabelle aus Messergebnissen erstellt werden und anschließend äquivalent dazu damit weiterfahren werden (diskrete Verwendung, lineare Interpolation oder Regressionmittels mathematischer Funktionen).

Von weiterer Bedeutung kann eine Kopplung von physikalischen Domänen oder verschiedenen Modellen sein.

Klassischerweise werden in der virtuellen Produktentwicklung Domänen einzeln betrachtet, da eine gemeinsame Betrachtung sehr rechen- und speicheraufwendig und kaum praktikabel ist. Durch die Modellreduktion ergibt sich die Möglichkeit, die Modelle verschiedener Domänen zu koppeln. Zum Beispiel ist die Kopplung eines detaillierten Magnetkreismodells, dessen Rechenzeit auf einem leistungsstarken Rechencluster mehrere Tage bis Wochen beträgt, mit einem thermischen Modell nicht von Vorteil. Durch die Reduktion der Detailmodelle werden die benötigte Rechenleistung und der Speicherbedarf niedriger und so die Kopplung der Modelle hinsichtlich des wirtschaftlichen Aspekts ermöglicht. Diese ist in vielen Fällen zur möglichst genauen Abbildung des realen Verhaltens notwendig.

### Kopplung von physikalischen Domänen oder verschiedenen Modellen - Beispiele

▪ Der Wicklungswiderstand ist näherungsweise linear abhängig von der Temperatur des Kupfers. Abhängig vom Wicklungswiderstand ändert sich die Verlustleistung in der Wicklung näherungsweise linear. Abhängig von der Verlustleistung ändert sich das thermische Verhalten, zum Beispiel Wicklungs- und Lagertemperatur stark nicht-linear, was sich wiederum auf den Wicklungswiderstand auswirkt. Hier ist somit je nach Anforderung an die Ergebnisse des Modells eine Kopplung notwendig.
▪ Das notwendige Drehmoment und die Drehzahl eines Ventilators sind stark abhängig vom Anlagenwiderstand und zum Beispiel Druckdifferenz und Temperatur des Fördermediums. Abhängig vom Lastmoment ändert sich das Verhalten des Magnetkreises, d.h. Ströme durch die Wicklung, magnetisches Feld, Drehzahl, etc. Abhängig davon ändern sich dann auch Leistungsaufnahme, Verluste und erreichbare Drehzahl. Auch hier ist im Falle einer Kundenanwendung die Kopplung des Ventilatorverhaltens mit der Einbausituation je nach Anwendungsfall vorstellbar.

### Konkretisierung einer technischen Umsetzung - Beispiel a)

▪ Erstellung eines thermischen FE-Modells eines Ventilators →Rechenintensives und speicherintensives FE-Modell mit 1.000.000 Elementen zusätzlich zur Polynomfunktion. Wärmequellen und -senken sind als Polynomfunktionen abhängig von Eingangsstrom und Drehzahl abgebildet.
▪ Erstellung eines reduzierten thermischen Modells über statistische Methoden, das die Elektronikbauteiltemperatur abhängig von Eingangsstrom und Drehzahl abbildet. → Polynomfunktion, die Temperatur abhängig von Eingangsstrom und Drehzahl beschreibt = virtueller Temperatursensor.
▪ Kennlinie aus Datenblatt zur Lebensdauer des Elektronikbauteiles abhängig von seiner Temperatur → Betriebsparameterspezifischer Algorithmus, der aus virtuellem Temperatursensor die Ausfallwahrscheinlichkeit berechnet.
▪ Nutzung für Predictive Maintenance, zur Überwachung oder zur Optimierung des Betriebspunktes → Intelligenter Algorithmus.

### Konkretisierung einer technischen Umsetzung - Beispiel b)

▪ Erfassung von Stromzeiger und Motordrehzahl durch integrierte Elektronik/ Regelung. Daraus wird der elektromagnetische Arbeitspunkt abgeleitet.
▪ Anhand dieses Arbeitspunktes ergeben sich über Look-Up-Tabellen oder Polynomfunktionen die Verluste von Motor und Leistungselektronik.
▪ Ein thermisches Modell verarbeitet die Verlustwerte und ermittelt Temperaturen kritischer Systembestandteile wie Kugellager oder Halbleiterbauteile.
▪ Gleichzeitig werden über einen realen Sensor Bauteilschwingungen aufgezeichnet. Die lokalen Schwingungen werden durch Verhaltensmodelle auf das Gesamtsystem virtuell projiziert, wodurch zum Beispiel die Lagerbelastung aufgrund von Schwingungen abgeschätzt wird.
▪ Mithilfe betriebsparameterspezifischer Algorithmen werden ermittelte Temperaturen und Schwingwerte in eine Abschätzung der Bauteil- und Ventilatorlebensdauer umgerechnet.
▪ Weitergreifende Maßnahmen wie die Predictive Maintenance können dadurch ermöglicht werden.
▪ Gleichzeitig kann mit der Kenntnis der Verluste der Arbeitspunkt und der Systemwirkungsgrad durch regelungstechnische Anpassungen, wie zum Beispiel die Variation des Vorsteuerwinkels optimiert werden.

Im Rahmen einer Anwendung bei Ventilatoren und/oder Ventilatorsystemen gelten die voranstehenden Ausführungen zur Modellreduktion der Detailmodelle, wobei eine Ordnungsreduktion mittels der Krylov-Unterraummethode erfolgen kann. Das Ziel ist die Minimierung der Rechenzeit, der benötigten Rechenleistung und des Speicherbedarfs, so dass eine Berechnung in Echtzeit möglich ist. Die virtuellen Sensoren bleiben erhalten und liefern Ausgangsgrößen.

Gemäß **Figur 9** werden in einem nächsten Schritt die reduzierten Modelle zum Ventilator-Systemmodell verknüpft. Im Konkreten werden die reduzierten Modelle wie das thermische Modell, das Magnetkreismodell, das Softwaremodell, das Elektronikmodell, etc. zu einem Ventilator-Systemmodell verknüpft. Das Ventilator-Systemmodell bildet die Physik des einzelnen Ventilators oder einer Ventilatorgruppe oder eines Ventilatorssystems ab und berechnet abhängig von den Umgebungsbedingungen und Betriebszuständen den Wirkungsgrad, die Laufperformance und etwaige Wechselwirkungen zwischen den einzelnen Modellen.

In einem nächsten Schritt findet eine Verknüpfung der Ventilator-Systemmodelle mit dem Anlagenmodell statt, wodurch ein Gesamtsystemmodell entsteht. Das Gesamtsystemmodell besteht aus mehreren Ventilatoren und einer Anlage, beispielsweise umfassend einen Verdichter und/oder Verflüssiger. Das Anlagenmodell kann mit dem gleichen Workflow wie das Ventilator-Systemmodell realisiert werden. Anschließend lassen sich die Ventilator-Systemmodelle und das Anlagenmodell zu einem Gesamtsystemmodell verknüpfen.

Ein nächster Schritt umfasst eine Verhaltensstudie, nämlich die Berechnung von Antwortgrößen mit Eingangsparameterkombinationen.

Ziel der Studie ist es, das Verhalten des Gesamtsystemmodells zu bestimmen und mit diesem Wissen das System in Echtzeit zu regeln.

Gemäß Gesamtsystemverhalten werden Wirkungen und Einflüsse von Modelleingangsgrößen auf die Modellantwortgrößen im Designraum übertragen bzw. abgebildet.

Der Designraum ist ein mehrdimensionaler Raum, der von den möglichen Eingangsgrößen aufgespannt wird. Die Anzahl der Eingangsgrößen entspricht der Dimension des Designraums. Dies bedeutet bei zehn Eingangsgrößen zehn Dimensionen.

Die Modelleingangsgrößen werden in definierten Grenzen variiert. Dadurch entstehen Parameterkombinationen, die den mehrdimensionalen Raum gleichmäßig abdecken und dadurch beschreiben. Die Modellantwortgrößen wie Wirkungsgrad und Laufperformance werden anhand der Parameterkombinationen berechnet. Die Verhaltensstudie liefert einen Designraum, der mit Antwortgrößen in Abhängigkeit der Eingangsgrößen gefüllt ist. Dieser Raum bildet das Gesamtsystemverhalten ab.

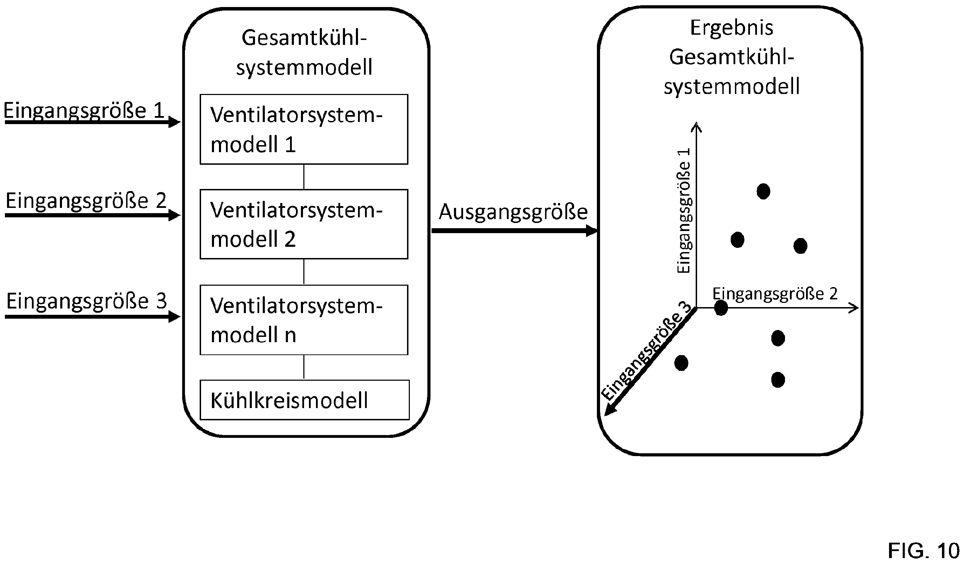

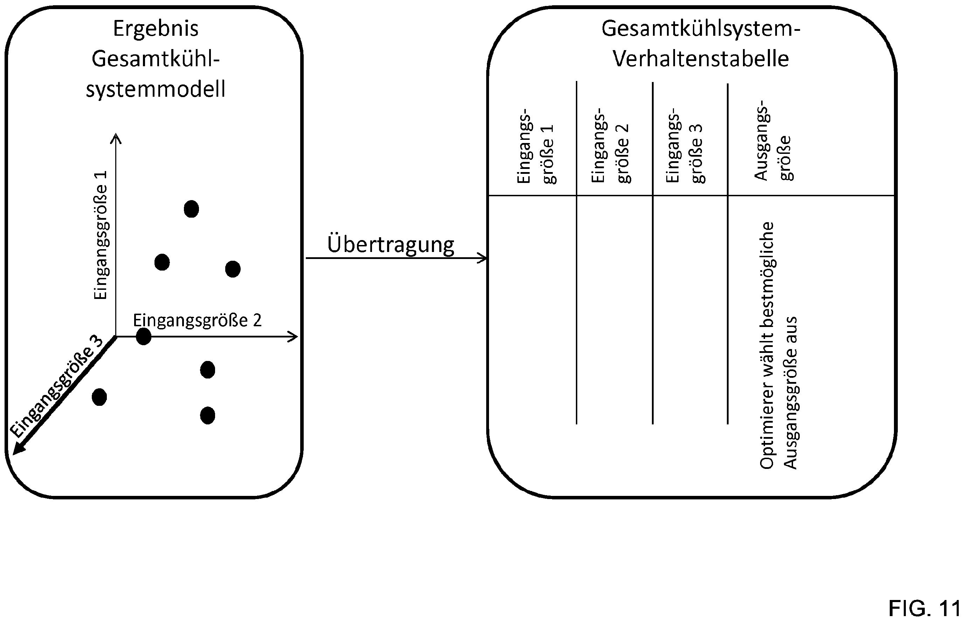

**Figur 10** zeigt, wie verschiedene Eingangsgrößen in Ventilatorsystemmodelle und Kühlkreismodelle einfließen, wodurch sich das Gesamtkühlsystemmodell ergibt. Eine entsprechende Ausgangsgröße ist als Ergebnis des Gesamtkühlsystemmodells zu verstehen. Das daraus resultierende Wissen kann gemäß **Figur 11** in eine Verhaltenstabelle überführt werden. Wenn das Gesamtsystemverhalten bekannt ist, lassen sich die Eingangsgrößen anpassen, um eine bestmögliche Antwortgröße zu erhalten.

Das Anpassen oder die Auswahl der Antwortgröße und der dazugehörigen Eingangsgrößenkombination aus der Verhaltenstabelle wird durch einen Optimierer realisiert, nämlich gemäß dem in Figur 9 aufgezeigten weiteren Verfahrensschritt, wonach der Optimierer die beste Antwortgröße auswählt und somit die bestmögliche Eingangsparameterkombination für den aktuellen Betriebszustand wählt.

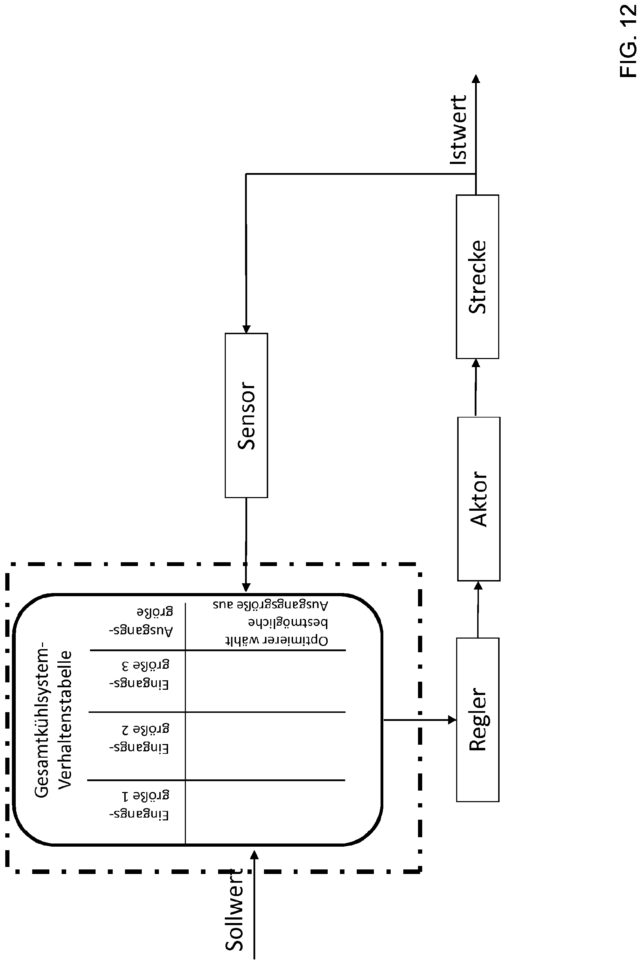

Gemäß der Darstellung in **Figur 12** wählt der Optimierer die beste Antwortgröße aus und bestimmt die bestmögliche Eingangsparameterkombination für den aktuellen Betriebszustand. Mit anderen Worten wählt der Optimierer je nach Umgebungsbedingung/Betriebszustand die bestmögliche Modellantwort aus. Die dazugehörigen Parameterkombinationen der Eingangsgrößen werden eingestellt. Somit lässt sich das System bestmöglich regeln. Die Gesamtkühlsystem-Verhaltenstabelle kann auf einem beliebigen Prozessor laufen, vorzugsweise auf einem Mikroprozessor des Ventilators, der ohnehin vorhanden ist. Eine Regelung ist so möglich.

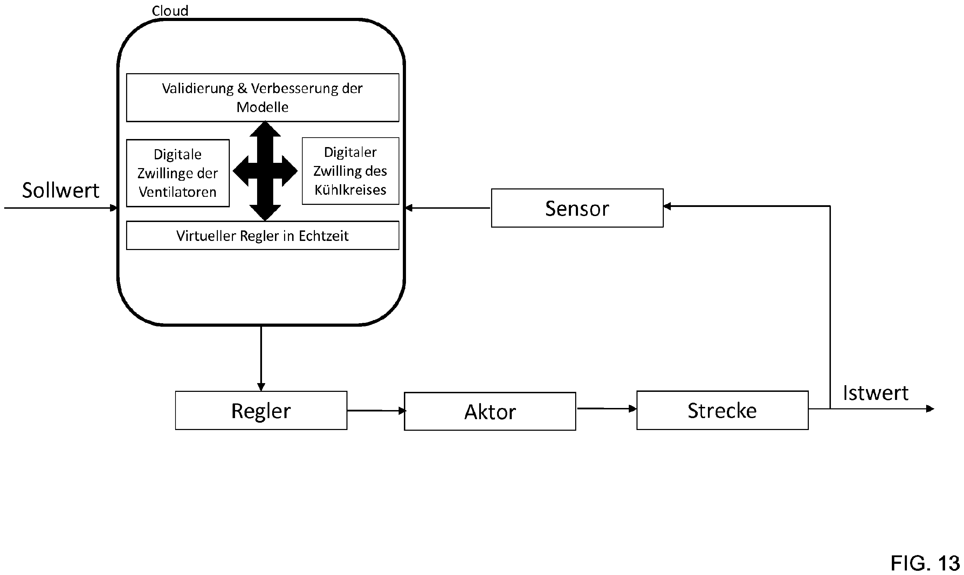

**Figur 13** bezieht sich auf eine etwaige Weiterentwicklung, wonach die Gesamtkühlsystem-Verhaltenstabelle gemäß der Darstellung in Figur 12 durch eine Systemsimulation des Kühlkreises in einer Cloud erweitert wird. Das System umfasst digitale Zwillinge des Ventilators, digitale Zwillinge des Kühlkreises, eine Validierungseinheit und einen virtuellen Regler/Optimierer.

Die digitalen Zwillinge des Ventilators und des Kühlkreises bilden das System physikalisch ab. Der virtuelle Regler verfügt über das Wissen der Gesamtkühlsystem-Verhaltenstabelle gemäß der Darstellung in Figur 12. Außerdem kann der virtuelle Regler durch maschinelles Lernen dazulernen, beispielsweise bezogen auf die spezifischen Kundenanwendungen. Die Validierungseinheit verbessert die digitalen Zwillinge durch den Vergleich von Sollwert und Istwert. So besitzt das System die Fähigkeit, spezifische Kundenmuster zu simulieren und sich aus den daraus resultierenden Kenntnissen zu verbessern.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränkt. Der Schutzbereich der Erfindung wird durch die Ansprüche bestimmt.

## Patentansprüche

1. Verfahren zur Optimierung des Wirkungsgrads und/oder der Lebensdauer eines Ventilators, wobei ausgehend von bauteil- oder funktionsspezifischen numerischen Detailmodellen, unter Zugrundelegung mindestens eines Algorithmus, eine Modell- und somit Datenreduktion zu bauteil- oder funktionsspezifischen Verhaltensmodellen erfolgt, wobei die Daten der reduzierten Modelle in Form von Tabellen oder Datenmatrizes bereitgestellt werden, wobei die reduzierten Daten der Verhaltensmodelle in einer Systemsimulation zu einem System-Verhaltensmodell mit Eingangs- und Ausgangsgrößen gekoppelt bzw. kombiniert werden, wobei die Daten des System-Verhaltensmodells, nämlich Eingangsgrößen und zugehörige Ausgangsgrößen des Ventilators, in Form einer Tabelle oder Datenmatrix bereitgestellt werden, und wobei die Eingangsgrößen und zugehörigen Ausgangsgrößen des Ventilators aus dem System-Verhaltensmodell einem Optimierer zur Auswahl zur Verfügung gestellt werden, um in Abhängigkeit von Rahmenbedingungen eine optimierte Regelung des Systems zu erzielen.

2. Verfahren nach Anspruch 1, **dadurch gekennzeichnet, dass** die Detailmodelle ein thermisches Modell und/oder ein Magnetkreismodell und/oder ein Flügelstellungs- und Strömungsmodell und/oder ein Umgebungsmodell und/oder ein digitales Zwillingsmodell eines oder mehrerer Ventilatoren und/oder des die Umgebung berücksichtigenden Gesamtsystems umfassen.

3. Verfahren nach Anspruch 1 oder 2, **dadurch gekennzeichnet, dass** die Rahmenbedingungen des Optimierers Umgebungsbedingungen des Ventilators sind, in Abhängigkeit derer die jeweils bestmögliche System-Ausgangsgröße, beispielsweise der System-Wirkungsgrad, in der Tabelle oder Matrix vorzugsweise in Echtzeit ausgesucht wird, unter dessen Voraussetzung die dazugehörige Eingangsgröße aus der jeweiligen Tabellenzeile gelesen wird, mit der dann die Regelung erfolgt.

4. Verfahren nach einem der Ansprüche 1 bis 3, **dadurch gekennzeichnet, dass** der Winkel der Flügelstellung so geregelt ist, dass ein optimaler System-wirkungsgrad je nach Betriebspunkt entsteht, wobei der Optimierer den optimalen Systemwirkungsgrad aus der System-Verhaltenstabelle aussucht und die korrespondierenden Eingangsgrößen der Regelung zuführt.

5. Verfahren nach einem der Ansprüche 1 bis 4, **dadurch gekennzeichnet, dass** die Strömungsgeschwindigkeit und die dadurch notwendige Lastverteilung einzelner Ventilatoren einer Anordnung von Ventilatoren, beispielsweise die Lastverteilung von Ventilatoren eines Data-Centers, so geregelt wird, dass ein optimaler Systemwirkungsgrad je nach Temperatur im Data-Center entsteht, wobei der Optimierer den optimalen Systemwirkungsgrad aus der System-Verhaltenstabelle aussucht und die entsprechenden Eingangsgrößen der Regelung zuführt.

6. Verfahren nach einem der Ansprüche 1 bis 5, **dadurch gekennzeichnet, dass** die optimierte Regelung in einen C-Code überführt wird, wodurch eine Regelung in Echtzeit auf einem Standard-Mikroprozessor möglich ist.

7. Verfahren nach einem der Ansprüche 1 bis 5, wobei der Gewinnung der Detailmodelle die Ermittlung von Betriebszuständen eines Ventilators unter Nutzung eines digitalen Abbildes des Ventilators und mindestens eines betriebsparameterspezifischen Algorithmus zugrunde liegt, wobei die Ermittlung folgende Verfahrensschritte umfasst:
Schaffen des digitalen Abbildes des realen Ventilators durch Abbildung dessen Eigenschaften mittels mathematischer Berechnungsmodelle und ggf. bekannter Daten,
Schaffen des mindestens einen betriebsparameterspezifischen Algorithmus unter Berücksichtigung bekannter Zusammenhänge, Kennlinien, etc.
Berechnung von Bauteilzuständen des Ventilators über das digitale Abbild mittels virtueller Sensoren,
Übertragung der Bauteilzustände an den Algorithmus, der aus den Bauteilzuständen Betriebsparameter des Ventilators berechnet.

8. Verfahren nach Anspruch 7, **dadurch gekennzeichnet, dass** dem digitalen Abbild als mathematisches und/oder physikalisches und/oder empirisches und/oder statistisches oder als kombiniertes Modell ein thermisches und/oder mechanisches und/oder Magnetkreis-Berechnungsmodell zugrunde gelegt wird, wobei das jeweilige Berechnungsmodell von dem jeweiligen Detailmodell in das reduzierte Modell überführt wird.

## Claims

1. Method for optimising the degree of efficiency and/or the service-life of a fan, wherein based on component-specific or function-specific digital detailed models, taking at least one algorithm as a basis, a model and data reduction with respect to component-specific or function-specific behaviour models is carried out, wherein the data of the reduced models are provided in the form of tables or data matrices, wherein the reduced data of the behaviour models are coupled or combined in a system simulation to form a system behaviour model with input and output variables, wherein the data of the system behaviour model, that is to say, input variables and associated output variables of the fan, are provided in the form of a table or data matrix, and wherein the input variables and associated output variables of the fan are provided from the system behaviour model to an optimiser for selection in order to achieve an optimised control of the system depending on peripheral conditions.

2. Method according to claim 1, **characterised in that** the detailed models comprise a thermal model and/or a magnetic circuit model and/or a vane position and flow model and/or an environmental model and/or a digital twin model of one or more fans and/or the overall system which takes into account the environment.

3. Method according to claim 1 or 2, **characterised in that** the peripheral conditions of the optimiser are environmental conditions of the fan, depending on which the best possible system output variable, for example, the degree of system efficiency, is sought in the table or matrix preferably in real time, on condition of which the associated input variable with which the control is then carried out is read from the respective table row.

4. Method according to any one of claims 1 to 3, **characterised in that** the angle of the vane position is controlled in such a manner that an optimum degree of system efficiency is produced depending on the operating point, wherein the optimiser seeks the optimum degree of system efficiency from the system behaviour table and supplies the corresponding input variables to the control system.

5. Method according to any one of claims 1 to 4, **characterised in that** the flow speed and the consequently required load distribution of individual fans of an arrangement of fans, for example, the load distribution of fans of a data centre, is controlled in such a manner that an optimum degree of system efficiency is produced depending on the temperature in the data centre, wherein the optimiser seeks the optimum degree of system efficiency from the system behaviour table and supplies the corresponding input variables to the control system.

6. Method according to any one of claims 1 to 5, **characterised in that** the optimised control is converted into a C-code, whereby control is possible in real time on a standard microprocessor.

7. Method according to any one of claims 1 to 5, wherein obtaining the detailed models is based on establishing operating states of a fan using a digital image of the fan and at least one operating-parameter-specific algorithm, wherein the establishment comprises the following steps:
providing the digital image of the actual fan by imaging the properties thereof by means of mathematical calculation models and where applicable known data,
providing the at least one operating-parameter-specific algorithm taking into account known relationships,
characteristic lines, etcetera,
calculating component states of the fan via the digital image by means of virtual sensors,
transmitting the component states to the algorithm which calculates operating parameters of the fan from the component states.

8. Method according to claim 7, **characterised in that** a thermal and/or mechanical and/or magnetic circuit calculation model is taken as a basis for the digital image as a mathematical and/or physical and/or empirical and/or statistical or as a combined model, wherein the respective calculation model is converted from the respective detailed model into the reduced model.

## Revendications

1. Procédé d'optimisation du rendement et/ou de la durée de vie d'un ventilateur, dans lequel, à partir de modèles détaillés numériques spécifiques aux composants ou spécifiques aux fonctions, sur la base d'au moins un algorithme, a lieu une réduction de modèle et donc une réduction de données en modèles de comportement spécifiques aux composants ou spécifiques aux fonctions, dans lequel les données des modèles réduits sont mis à disposition sous la forme de tableaux ou de matrices de données, dans lequel les données réduites des modèles de comportement sont couplées ou combinées, dans une simulation de système, en un modèle de comportement de système avec des grandeurs d'entrée et des grandeurs de sortie, dans lequel les données du modèle de comportement de système, à savoir les grandeurs d'entrée et les grandeurs de sortie correspondantes du ventilateur, sont mises à disposition sous la forme d'un tableau ou d'une matrice de données, et dans lequel les grandeurs d'entrée et les grandeurs de sortie correspondantes du ventilateur provenant du modèle de comportement de système sont mises à la disposition d'un optimiseur, afin d'obtenir, en fonction des contraintes, une régulation optimisée du système.

2. Procédé selon la revendication 1, **caractérisé en ce que** les modèles détaillés comprennent un modèle thermique et/ou un modèle à circuit magnétique et/ou un modèle de position d'ailette et un modèle d'écoulement et/ou un modèle d'environnement et/ou un modèle jumeau numérique d'un ou plusieurs ventilateurs et/ou du système global prenant en compte l'environnement.

3. Procédé selon la revendication 1 ou 2, **caractérisé en ce que** les contraintes de l'optimiseur sont les conditions environnementales du ventilateur, en fonction desquelles la meilleure grandeur de sortie de système possible, par exemple le rendement du système, est recherché dans le tableau ou la matrice, de préférence en temps réel, selon la condition de laquelle la grandeur d'entrée correspondante est lue dans la ligne de tableau respective, avec laquelle la régulation a lieu ensuite.

4. Procédé selon l'une des revendications 1 à 3, **caractérisé en ce que** l'angle de la position d'ailette est régulée de sorte qu'un rendement optimal du système selon le point de fonctionnement en résulte, dans lequel l'optimiseur recherche le rendement optimal du système dans le tableau de comportement du système et introduit les grandeurs d'entrée correspondante dans la régulation.

5. Procédé selon l'une des revendications 1 à 4, **caractérisé en ce que** la vitesse d'écoulement et la répartition de charge nécessaire de certains ventilateurs d'une disposition de ventilateurs, par exemple la répartition de charge de ventilateurs d'un data center, est régulée de sorte qu'un rendement optimal du système en fonction de la température dans le data center en résulte, dans lequel l'optimiseur recherche le rendement optimal du système dans le tableau de comportement de système et introduit les grandeurs d'entrée correspondantes dans la régulation.

6. Procédé selon l'une des revendications 1 à 5, **caractérisé en ce que** la régulation optimisée est transmise dans un code C, ce qui permet une régulation en temps réel sur un microprocesseur standard.

7. Procédé selon l'une des revendications 1 à 5, dans lequel l'obtention des modèles détaillés est basée sur la détermination d'états de fonctionnement d'un ventilateur à l'aide d'une représentation numérique du ventilateur et d'au moins un algorithme spécifique aux paramètres de fonctionnement, dans lequel la détermination comprend les étapes suivantes :
réalisation de la représentation numérique du ventilateur réel par représentation de ses propriétés au moyen de modèles de calcul mathématiques et, le cas échéant, de données connues,
réalisation de l'au moins un algorithme spécifique aux paramètres de fonctionnement en tenant compte de relations, courbes caractéristiques, etc. connues,
calcul d'états de composants du ventilateur par l'intermédiaire de la représentation numérique au moyen de capteurs virtuels,
transmission des états de composants à l'algorithme qui calcule, à partir des états des composants, les paramètres de fonctionnement du ventilateur.

8. Procédé selon la revendication 7, **caractérisé en ce que** la représentation numérique, en tant que modèle mathématique et/ou physique et/ou empirique et/ou statistique ou en tant que modèle combiné, est basée sur un modèle de calcul thermique et/ou mécanique et/ou à circuit magnétique, dans lequel le modèle de calcul correspondant est transformé du modèle détaillé respectif en un modèle réduit.
